# EUROPEAN PATENT APPLICATION

(11) **EP 4 686 973 A1**
(43) Date of publication of application: **04.02.2026**
(21) Application number: 25193438.6
(22) Date of filing: 01.08.2025
(51) Int. Cl.: G02B 6/38, G02B 6/42

(54) **OPTOELECTRONIC CONNECTOR**

(30) Priority: 01.08.2024 US 202463678260 P
(71) Applicant: Acon Optics Communications Inc., New Taipai City 231 (TW)
(72) Inventor: CUI, Yang-Yang, New Taipei City 231 (TW); ZHANG, Rui, New Taipei City 231 (TW)
(74) Representative: Viering, Jentschura & Partner mbB Patent- und Rechtsanwälte

(57) **Abstract**

An optoelectronic connector (C) includes an inner frame (10), a core component (20), two conductive terminals (30), an elastic unit (40), a housing (50), a base member (60), and a sleeve member (70). The core component (20) is elastically displaceably inserted into the inner frame (10) along a first direction (D1). The conductive terminals (30) are inserted into the inner frame (10). One end of the elastic unit (40) abuts against the inner frame (10). The housing (50) has a wall portion (51), a fitting groove (52), a first end opening (53), and a second end opening (54). The first end opening (53) and the second end opening (54) are at two ends of the wall portion (51), the housing (50) is rotatably fitted over the inner frame (10) and the abuts against the other end of the elastic unit (40), and the fitting groove (52) is defined through the wall portion (51). The base member (60) passes through the second end opening (54) and is positioned with the inner frame (10). The sleeve member (70) is fitted over the base member (60).

## Description

### FIELD OF THE INVENTION

The instant disclosure relates to a connector, and more particular to a connector capable of transmitting optical signals and electric signals at the same time.

### BACKGROUND

Electronic devices are widely utilized in various fields. In general, an electronic device may be connected to the power supply through a connector to obtain the electricity for operation. As the electronic device offers increasingly diverse functions, the electronic device may possess requirements for transmitting other types of signals, for example, optical signals. However, under such configuration, to achieve transmission of different types of signals, another connector for transmitting that type of signals has to be used. As a result, the physical layout of the electronic device becomes complicated, resulting in inconvenience for the operation of the electronic device. Consequently, such issue is to be addressed.

### SUMMARY OF THE INVENTION

In view of these, an embodiment of the instant disclosure provides an optoelectronic connector. The optoelectronic connector comprises an inner frame, a core component, two conductive terminals, an elastic unit, a housing, a base member, and a sleeve member. The core component is elastically displaceably inserted into the inner frame along a first direction. The conductive terminals are inserted into the inner frame. One of two ends of the elastic unit abuts against the inner frame. The housing has a wall portion, a fitting groove, a first end opening, and a second end opening. The first end opening and the second end opening are at two ends of the wall portion, the housing is rotatably fitted over the inner frame through the first end opening and the abuts against the other end of the elastic unit, and the fitting groove is defined through the wall portion. The base member passes through the second end opening of the housing and is positioned with the inner frame. The sleeve member is fitted over the base member.

In some embodiments, the fitting groove of the housing has a first end, an extension portion, and a second end sequentially connected to each other. The first end is in communication with the first end opening, the first end and the second end are at different positions along the first direction, and the first end and the second end are at different circumferential positions of the housing.

In some embodiments, the extension portion of the fitting groove of the housing has a first section, a second section, and a third section sequentially connected to each other. The first section is connected to the first end, the third section is connected to the second end, and the first section and the third section extend along the first direction.

In some embodiments, the wall portion of the housing further has an inner side and an outer side opposite to each other. The inner frame is in a range surrounded by the inner side, the inner side of the housing has an inner flange, the base member further comprises two abutting blocks, and the inner flange of the housing abuts against the two abutting blocks.

In some embodiments, the inner frame further comprises an outer flange at an outer surface of the inner frame, and the two ends of the elastic unit respectively abut against the outer flange and the abutting blocks.

In some embodiments, the inner frame further comprises two open slots opposite to each other, and each of the abutting blocks of the base member is accommodated in a corresponding one of the open slots.

In some embodiments, the base member further comprises two protruding blocks. Each of the two protruding blocks has a first curved surface, and the first curved surfaces of the two protruding blocks are opposite to each other. The core component comprises a core member and an elastic member, one of two ends of the core member is in the inner frame, the other end of the core member is between the two first curved surfaces, and two ends of the elastic member respectively abut against the two protruding blocks and the core member.

**In** some embodiments, each of the protruding blocks of base member further comprises an engaging block, and the engaging block and the first curved surface are at opposite surfaces of each of the protruding blocks. The inner frame further has two engaging holes, and each of the engaging blocks of the base member is engaged with a corresponding one of the engaging holes of the inner frame.

**In** some embodiments, each of the engaging blocks has an inclined surface, the inclined surface has a first side and a second side opposite to each other. The first side and the second side are at different positions along the first direction, and the first side is nearer to the core component as compared with the second side along a second direction perpendicular to the first direction.

**In** some embodiments, the core member comprises an insertion pin, a blocking member, and a connection sleeve. The insertion pin and the connection sleeve are respectively at two opposite sides of the blocking member. The inner frame further has a first partition wall. The blocking member abuts against the first partition wall, the insertion pin is at one side of the first partition wall away from the base member, the connection sleeve is at one side of the first partition wall adjacent to the base member, and the elastic member abuts against the blocking member and the protruding blocks.

In some embodiments, the optoelectronic connector further comprises a ring fitted over an outer surface of the inner frame.

In some embodiments, the inner frame further has a guiding groove recessed from an outer surface of the inner frame, a cross-section of the guiding groove is rectangular, and a length of the guiding groove extends along the first direction.

### BRIEF DESCRIPTION OF THE DRAWINGS

The instant disclosure will become more fully understood from the detailed description given herein below for illustration only, and thus not limitative of the instant disclosure, wherein:
Fig. 1 illustrates an assembled perspective view showing an optoelectronic connector is mated with an optoelectronic adapter according to an exemplary embodiment of the instant disclosure;
Fig. 2 illustrates an exploded view showing the optoelectronic connector is detached from the optoelectronic adapter according to the exemplary embodiment of the instant disclosure;
Fig. 3 illustrates an exploded view (1) of the optoelectronic connector of the exemplary embodiment of the instant disclosure;
Fig. 4 illustrates an exploded view (2) of the optoelectronic connector of the exemplary embodiment of the instant disclosure;
Fig. 5 illustrates a perspective view of a base member of the optoelectronic connector of the exemplary embodiment of the instant disclosure;
Fig. 6 illustrates a cross-sectional view of the optoelectronic connector along line 6-6 shown in Fig. 1;
Fig. 7 illustrates a cross-sectional view of the optoelectronic connector along line 7-7 shown in Fig. 1;
Fig. 8 illustrates a cross-sectional view showing that the optoelectronic connector is detached from the optoelectronic adapter;
Fig. 9 illustrates an assembled cross-sectional view showing that the optoelectronic connector is assembled with the optoelectronic adapter;
Fig. 10 illustrates an operational schematic view (1) showing the optoelectronic connector is mating with the optoelectronic adapter;
Fig. 11 illustrates an operational schematic view (2) showing the optoelectronic connector is mating with the optoelectronic adapter; and
Fig. 12 illustrates an operational schematic view (3) showing the optoelectronic connector is mating with the optoelectronic adapter.

### DETAILED DESCRIPTION

Before the instant disclosure is described in detail in various embodiments, it should be noted that in the following description, the drawings are merely for schematic illustration, which are not necessarily drawn to scale, and not all details are necessarily shown in the drawings.

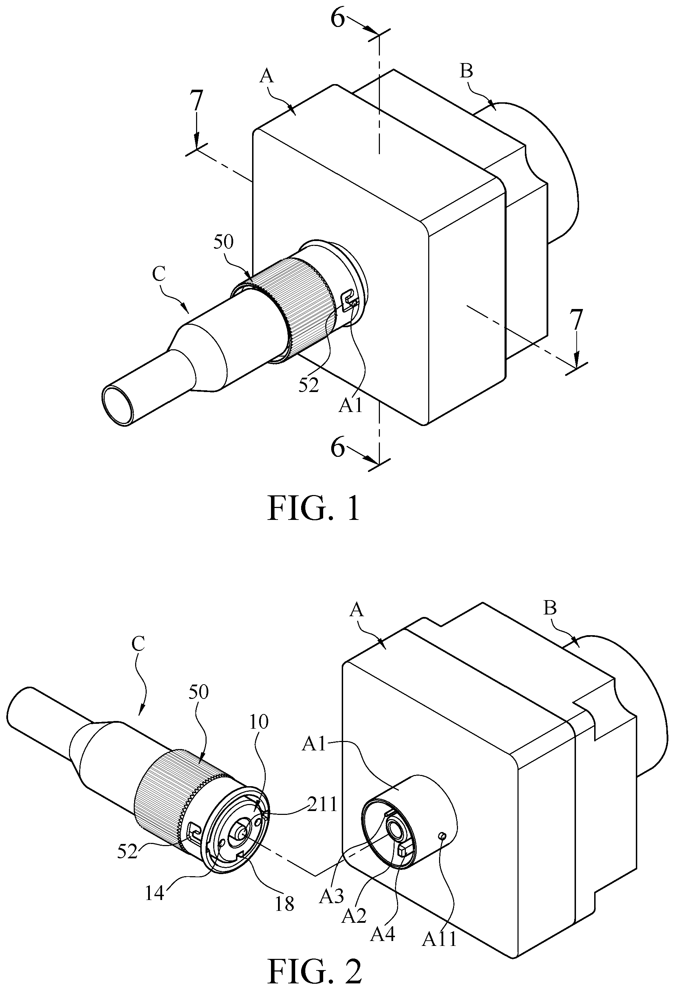

Please refer to Fig. 1 and Fig. 2. Fig. 1 illustrates an assembled perspective view showing an optoelectronic connector is mated with an optoelectronic adapter according to an exemplary embodiment of the instant disclosure. Fig. 2 illustrates an exploded view showing the optoelectronic connector is detached from the optoelectronic adapter according to the exemplary embodiment of the instant disclosure. In this embodiment, an optoelectronic connector C is provided, which is adapted to be coupled to an optoelectronic adapter A for optical signals and electric power transmissions. The optoelectronic adapter A is adapted to be provided on an apparatus or a device which transmits optical signals and is driven by electric power. As shown in Fig. 1 and Fig. 2, the optoelectronic adapter A is configured on a vehicle-mounted camera B (or a radar), and the optoelectronic connector C is coupled to the optoelectronic adapter A of the vehicle-mounted camera B to provide electric power for the vehicle-mounted camera B and to transmit the image captured by the vehicle-mounted camera B.

Please refer to Fig. 2. In some embodiments, the optoelectronic adapter A comprises a connection plug A1, a socket A2, and a conductive port A3. An outer surface of the connection plug A1 comprises a positioning portion A11, and the socket A2 and the conductive port A3 are at inner side of the connection plug A1.

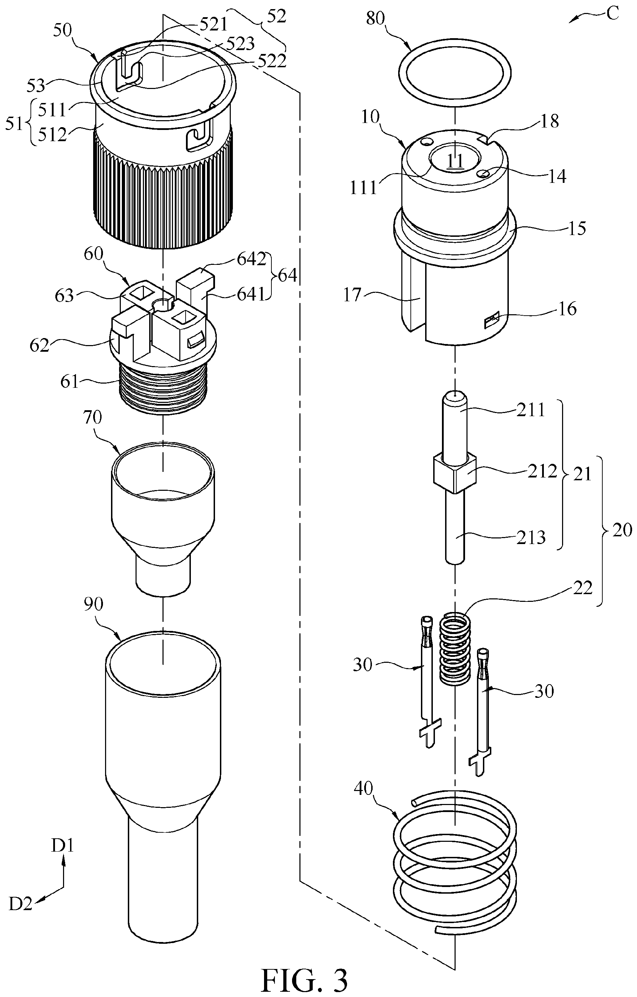

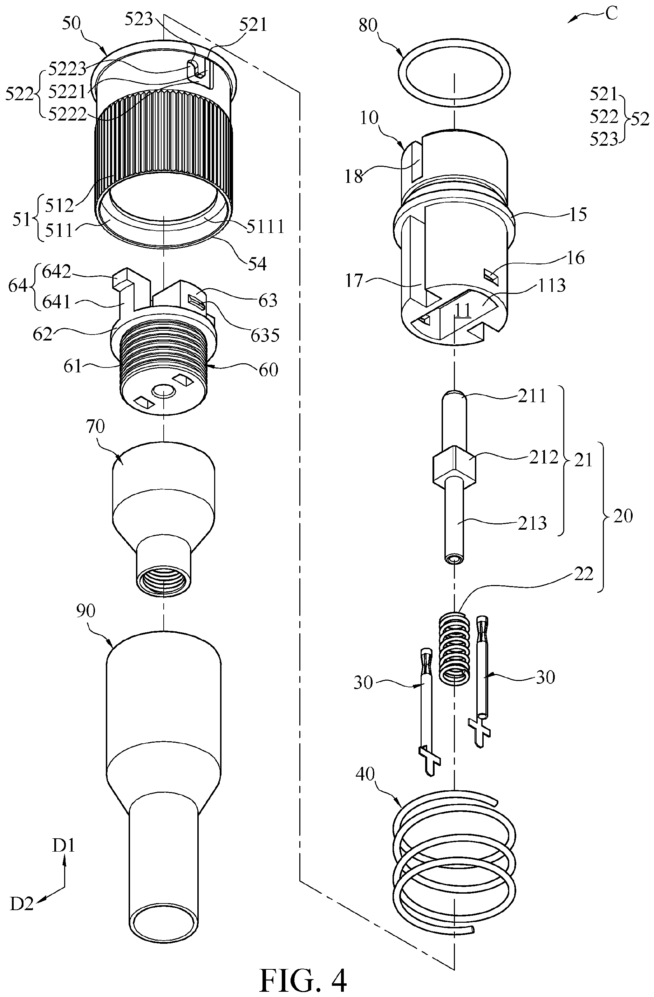

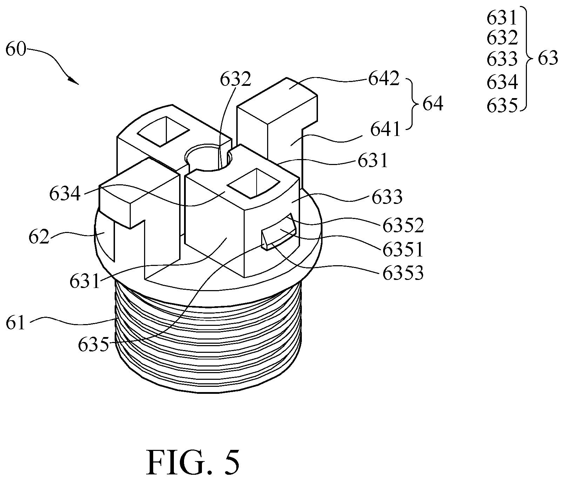

Please refer to Fig. 3 to Fig. 5. Fig. 3 illustrates an exploded view (1) of the optoelectronic connector of the exemplary embodiment. Fig. 4 illustrates an exploded view (2) of the optoelectronic connector of the exemplary embodiment. Fig. 5 illustrates a perspective view of a base member of the optoelectronic connector of the exemplary embodiment. In this embodiment, the optoelectronic connector C comprises an inner frame 10, a core component 20, two conductive terminals 30, an elastic unit 40, a housing 50, a base member 60, and a sleeve member 70. The core component 20 is elastically displaceably inserted into the inner frame 10 along a first direction D1. The conductive terminals 30 are inserted into the inner frame 10. One of two ends of the elastic unit 40 abuts against the inner frame 10. The housing 50 has a wall portion 51, a fitting groove 52, a first end opening 53, and a second end opening 54. The first end opening 53 and the second end opening 54 are at two ends of the wall portion 51. The housing 50 is rotatably fitted over the inner frame 10 through the first end opening 51 and abuts against the other end of the elastic unit 40, and the fitting groove 52 is defined through the wall portion 51. The base member 60 passes through the second end opening 54 of the housing 50 and is positioned with the inner frame 10. The sleeve member 70 is fitted over the base member 60. Accordingly, one or some embodiments can provide an optoelectronic connector C capable of supplying electric power and transmitting optical signals at the same time.

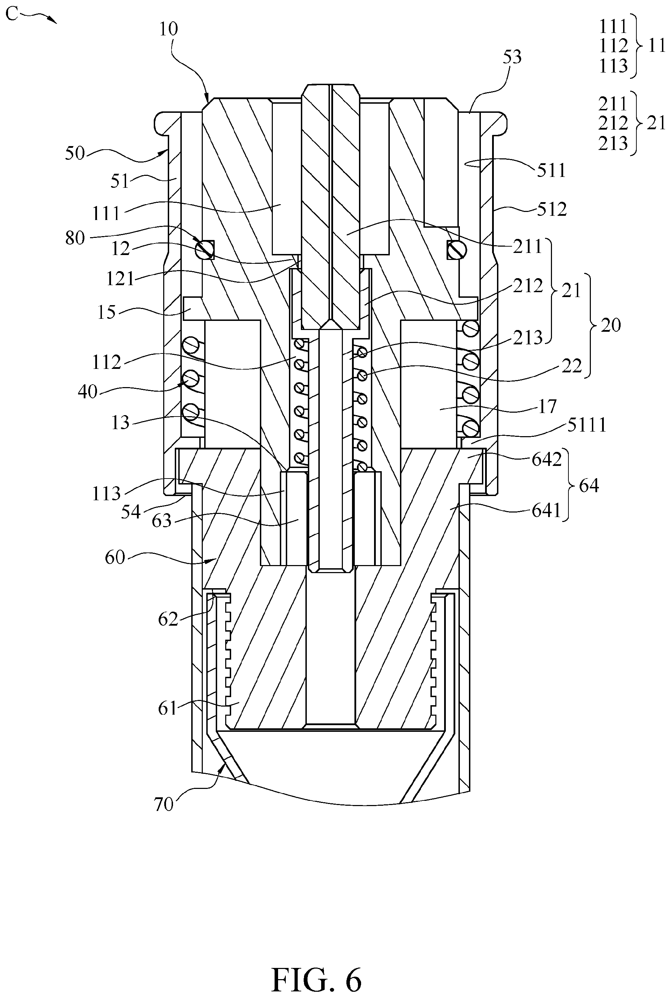

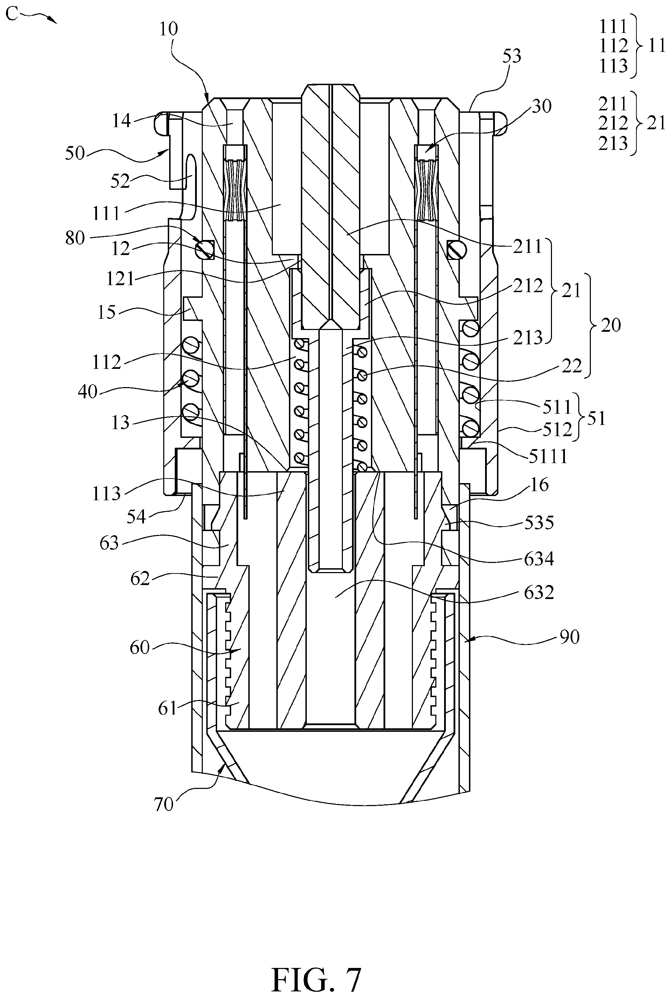

Please refer to Fig. 3 and Fig. 4 as well as Fig. 6 and Fig. 7. Fig. 6 illustrates a cross-sectional view of the optoelectronic connector along line 6-6 shown in Fig. 1. Fig. 7 illustrates a cross-sectional view of the optoelectronic connector along line 7-7 shown in Fig. 1. The inner frame 10 is mainly for carrying the core component 20 and the conductive terminals 30. In some embodiments, the inner frame 10 is a hollow cylindrical structure. In these embodiments, the inner frame 10 is a cylindrical structure and has a channel 11 defined through two ends of the inner frame 10 along the first direction D1, and the inner frame 10 has a first partition wall 12 and a second partition wall 13 in the channel 11. The channel 11 has a first portion 111, a second portion 112, and a third portion 113 sequentially in communication with each other. The first partition wall 12 is between the first portion 111 and the second portion 112, and the second partition wall 13 is between the second portion 112 and the third portion 113. A portion of the core component 20 is in the first portion 111, another portion of the core component 20 is elastically displaceably in the second portion 112 and the third portion 113, and the base member 60 is in the third portion 113.

Please refer to Fig. 3 and Fig. 4 as well as Fig. 6 and Fig. 7. In some embodiments, the core component 20 comprises a core member 21 and an elastic member 22. In some embodiments, the core member 21 comprises an insertion pin 211, a blocking member 212, and a connection sleeve 213. The blocking member 212 is a rectangular structure, the insertion pin 211 and the connection sleeve 213 are cylindrical structures, and a cross-section of the insertion pin 211 and a cross-section of the connection sleeve 213 are each less than a cross-section of the blocking member 212. In some embodiments, the insertion pin 211 is formed of ceramic, and a center of the insertion pin 211 has a tiny hole for positioning with optical fibers.

Please refer to Fig. 3 and Fig. 6. In some embodiments, the shape of the cross-section of the first portion 111 of the channel 11 is circular, the first partition wall 12 has a first through hole 121, the shape of the cross-section of the first through hole 121 is circular, the shape and the size of the first through hole 121 correspond to the shape and the size of the insertion pin 211, and a diameter of the first through hole 121 is less than a diameter of the first portion 111 of the channel 11. Therefore, the insertion pin 211 can be inserted into the first portion 111 through the first through hole 121 of the first partition wall 12, and then the first portion 111 is adapted to be mated with the optoelectronic adapter A.

Please refer to Fig. 6. In some embodiments, the shape of the cross-section of the second portion 112 of the channel 11 is rectangular and corresponds to the shape of the blocking member 212 of the core member 21, and the size of the cross-section of the second portion 112 is greater than the size of the first through hole 121. In these embodiments, the blocking member 212 is in the second portion 112 and limited by the first partition wall 12, so that the core member 21 is limited by the blocking member 212 and the first partition wall 12 and thus can be moved only toward the third portion 113 unidirectionally.

Please refer to Fig. 6 and Fig. 7. In some embodiments, the connection sleeve 213 is in the second portion 112 and the third portion 113, the elastic member 22 is fitted over the connection sleeve 213, one of two ends of the elastic member 22 abuts against the blocking member 212, and the other end of the elastic member 22 abuts against the base member 60. Therefore, the core member 21 is limited between the inner frame 10 and the base member 60, and the core member 21 can perform elastic displacement in the channel 11. Accordingly, when the optoelectronic connector C is mated with the optoelectronic adapter A, the elasticity of the core member 21 provides the cushioning function for the optoelectronic connector C during the mating process, thereby reducing possible damages to the core member 21.

Please refer to Fig. 3 and Fig. 7. In some embodiments, the inner frame 10 further comprises two through holes 14, and the through holes 14 extends along the first direction D1 and are at two sides of the channel 11. In these embodiments, the position of the through hole 14 along the first direction D1 corresponds to the positions of the first portion 111 and the second portion 112 of the channel 11. In other words, in these embodiments, one of two ends of the through hole 14 corresponds to one end of the first portion 111 away from the second portion 112, and the other end of the through hole 14 corresponds to one end of the second portion 112 away from the first portion 111. In these embodiments, a portion of each of the conductive terminals 30 is inserted into a corresponding one of the through holes 14 so as to be mated with the optoelectronic adapter A, and another portion of each of the conductive terminals 30 extends toward the third portion 113 so as to be connected to conductive wires.

Please refer to Fig. 3 and Fig. 4 as well as Fig. 6 and Fig. 7. In some embodiments, the inner frame 10 further comprises an outer flange 15 at an outer surface of the inner frame 10. Moreover, the wall portion 51 of the housing 50 has an inner side 511 and outer side 512 opposite to each other. The inner side 511 faces the inner frame 10 and has an inner flange 5111. When the housing 50 is fitted over the inner frame 10, the elastic unit 40 is between the outer flange 15 of the inner frame 10 and the inner flange 5111 of the housing 50. In these embodiments, the elastic unit 40 is a compressive spring, and the base member 60 is arranged at one end of the inner frame 10 and abuts against the inner flange 5111 of the housing 50. Therefore, the elastic unit 40 is normally stretched between the outer flange 15 of the inner frame 10 and the inner flange 5111 of the housing 50, and the elastic unit 40 normally pushes against the housing 50 to abut against the base member 60. Therefore, the base member 60 can limit the position of the housing 50, while the elastic unit 40 allows the housing 50 to be moved resiliently.

Please refer to Fig. 3 and Fig. 4. In some embodiments, the housing 50 is a hollow cylindrical structure extending along the first direction D1 and is formed by encircling the wall portion 51. The fitting groove 52 of the housing 50 is adapted to be mated with the positioning portion A11 of the optoelectronic adapter A. In some embodiments, the positioning portion A11 of the optoelectronic adapter A is a protruding structure; in these embodiments, the fitting groove 52 has a first end 521, an extension portion 522, and a second end 523 sequentially connected to each other. The first end 521 is in communication with the first end opening 53, the first end 521 and the second end 523 are at different positions along the first direction D1, and the first end 521 and the second end 523 are at different circumferential positions of the housing 50. Accordingly, the housing 50 can be fitted over the positioning portion A11 of the optoelectronic connector A through the first end 521 of the fitting groove 52. Then, the housing 50 is rotated, and the housing 50 is now configured so that the second end 523 of the fitting groove 52 corresponds to the positioning portion A11, allowing the optoelectronic connector C to be stably positioned with the optoelectronic adapter A.

Please refer to Fig. 3 and Fig. 4. In some embodiments, the extension portion 522 of the fitting groove 52 of the housing 50 comprises a first section 5221, a second section 5222, and a third section 5223 sequentially connected to each other. The first section 5221 is connected to the first end 521 and extends from the first end 521 along the first direction D1, the second section 5222 is angularly connected between the first section 5221 and the third section 5223, and the third section 5223 extends from the second section 5222 along the first direction D1 and is connected to the second end 523. In some embodiments, the second section 5222 extends along a second direction D2 perpendicular to the first direction D1, and the second end 523 is between the first end opening 53 and the second end opening 54 along the first direction D1.

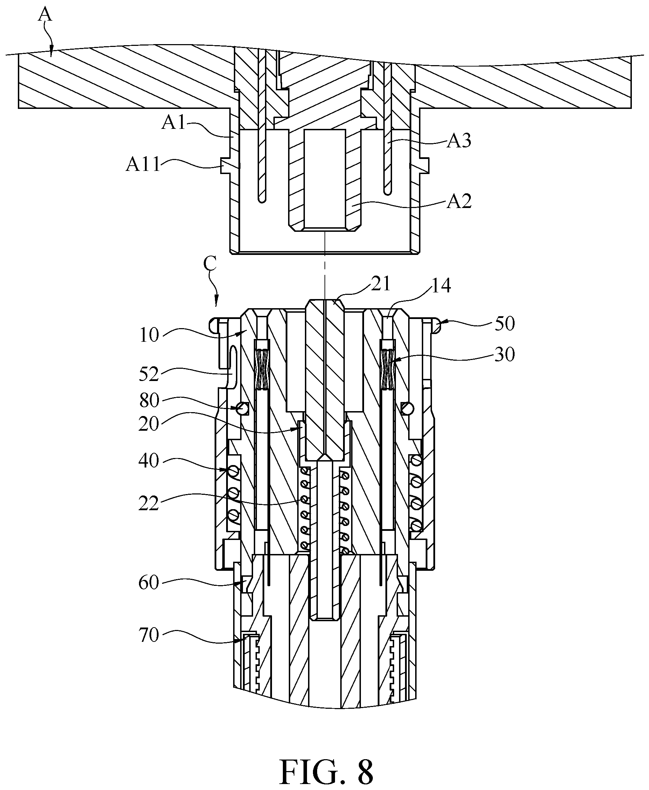

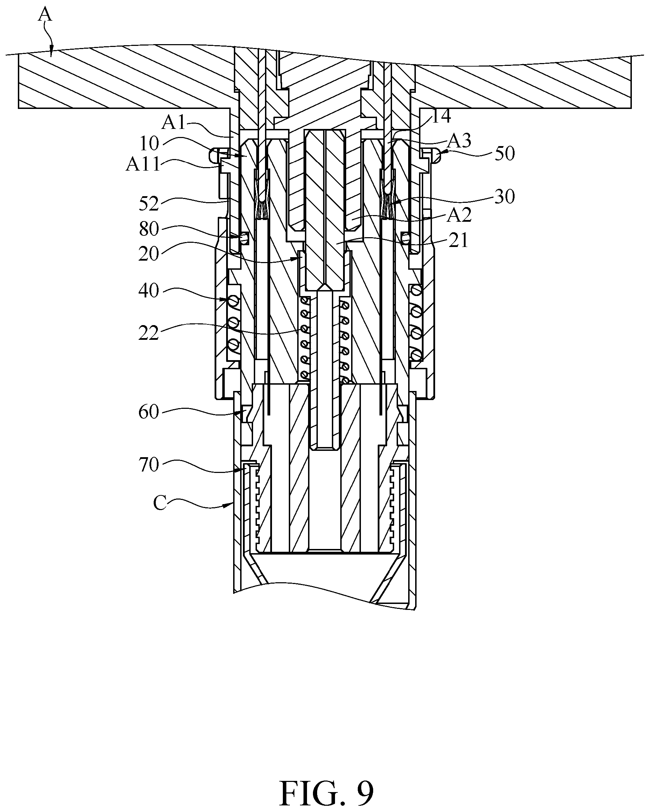

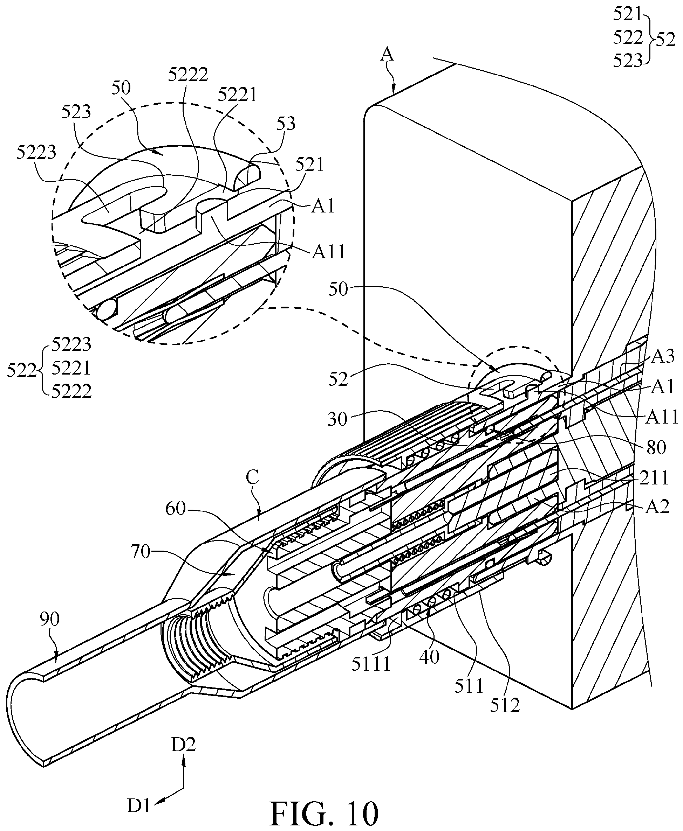

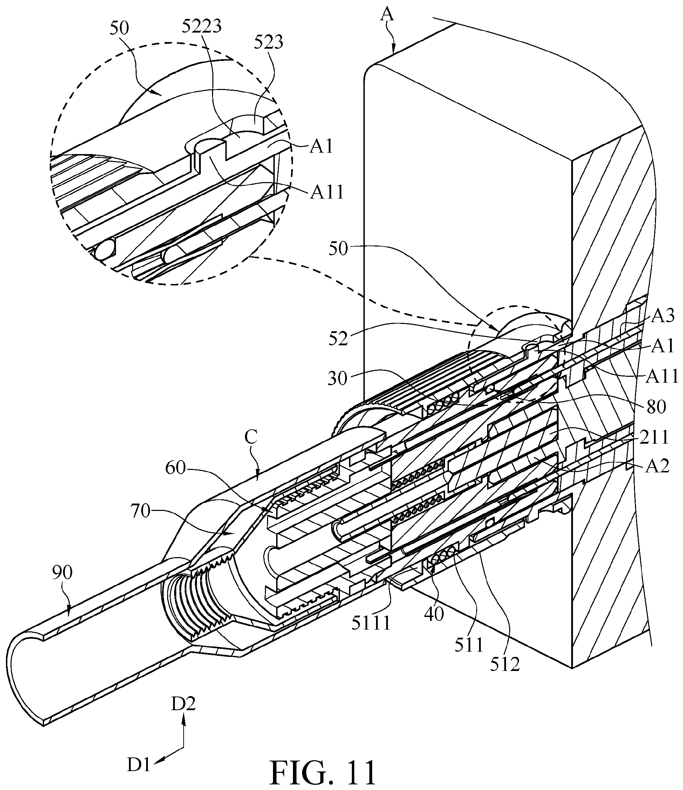

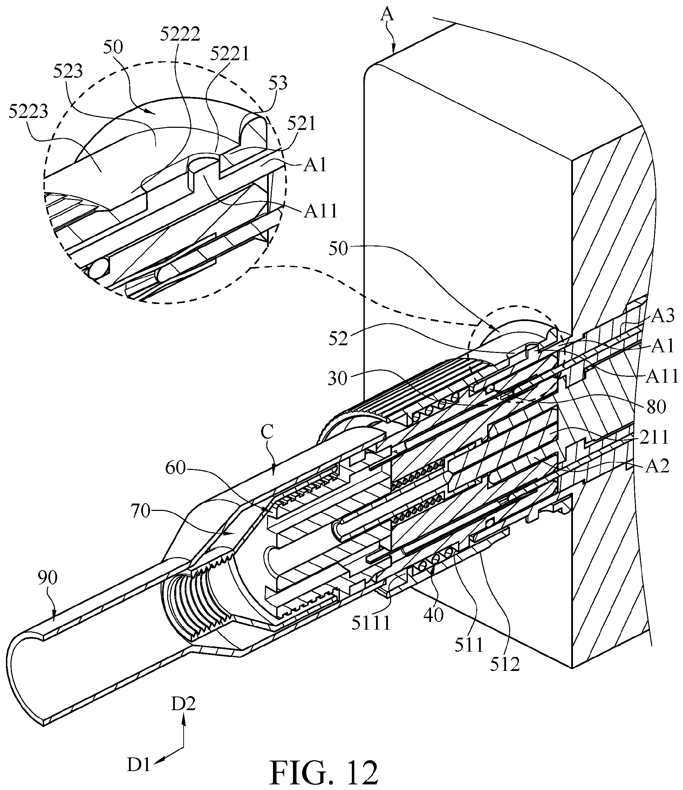

In the following paragraphs, the operations for assembling the optoelectronic connector C with the optoelectronic adapter A for these embodiments are described. Please refer to Fig. 8 to Fig. 12. Fig. 8 illustrates a cross-sectional view showing that the optoelectronic connector is detached from the optoelectronic adapter . Fig. 9 illustrates an assembled cross-sectional view showing that the optoelectronic connector is assembled with the optoelectronic adapter . Fig. 10 illustrates an operational schematic view (1) showing the optoelectronic connector is mating with the optoelectronic adapter . Fig. 11 illustrates an operational schematic view (2) showing the optoelectronic connector is mating with the optoelectronic adapter . Fig. 12 illustrates an operational schematic view (3) showing the optoelectronic connector is mating with the optoelectronic adapter . First, the first end 521 in communication with the fitting groove 52 of the first end opening 53 is fitted over the positioning portion A11 of the optoelectronic adapter A (as the configuration shown in Fig. 10), and then the operator applies a force on the housing 50 along the first direction D1. Therefore, the first section 5221 of the fitting groove 52 of the housing 50 is guided by the positioning portion A11, and the configuration of the fitting groove 52 of the housing 50 now changes so that the second section 5222 corresponds to the positioning portion A11. Hence, during the movement of the housing 50, the housing 50 compresses the elastic unit 40 to allow the elastic unit 40 to restore the elastic force.

Next, when the configuration of the fitting groove 52 of the housing 50 changes so that the second section 5222 corresponds to the positioning portion A11, the housing 50 is rotated, and the configuration of the fitting groove 52 of the housing 50 thus changes again so that a joint portion between the second section 5222 and the third section 5223 corresponds to the positioning portion A11 (as the configuration shown in Fig. 11). Now, the operator just needs to release the force applied to the housing 50 along the first direction D1, and the elastic unit 40 can release the elastic force to drive the housing 50 to be moved oppositely along the first direction D1, thereby allowing the configuration of the housing 50 to be changed so that the second end 523 of the fitting groove 52 corresponds to the positioning portion A11 (as the configuration shown in Fig. 9 and Fig. 12). Under this configuration, the housing 50 of the optoelectronic connector C can be stably positioned with the positioning portion A11 of the optoelectronic adapter A through the fitting groove 52.

When the positioning between the optoelectronic connector C and the optoelectronic adapter A is to be released, firstly the operator applies a force on the housing 50 along the first direction D1, so that the configuration of the fitting groove 52 of the housing 50 now gradually changes from that the second end 523 corresponds to the positioning portion A11 to that the second section 5222 corresponds to the positioning portion A11. During the movement of the housing 50, the housing 50 compresses the elastic unit 40 to allow the elastic unit 40 to restore the elastic force.

Next, when the configuration of the fitting groove 52 of the housing 50 changes so that the joint portion between the second section 5222 and the third section 5223 corresponds to the positioning portion A11 (as the configuration shown in Fig. 11), the housing 50 is rotated, and the configuration of the fitting groove 52 of the housing 50 changes again so that the first section 5221 corresponds to the positioning portion A11. Now, the operator just needs to release the force applied to the housing 50 along the first direction D1, and the elastic unit 40 can release the elastic force to drive the housing 50 to be moved oppositely along the first direction D1, thereby allowing the configuration of the housing 50 to be changed so that the first end 521 corresponds to the positioning portion A11 (as the configuration shown in Fig. 10). Under this configuration, the fitting groove 52 of the housing 50 can be detached from the positioning portion A11 of the optoelectronic adapter A, so that the mating between the optoelectronic connector C and the optoelectronic adapter A can be released.

Please refer to Fig. 3 to Fig. 5 as well as Fig. 6 and Fig. 7. In some embodiments, the base member 60 comprises a connection section 61, an intermediate surface 62, two protruding blocks 63, and two abutting blocks 64. The connection section 61 is configured as a screw and is adapted to be connected to the sleeve member 70. The intermediate surface 62 is connected to one end of the connection section 61. The protruding blocks 63 and the abutting blocks 64 are connected to one surface of the intermediate surface 62 away from the connection section 61. In these embodiments, the protruding blocks 63 and the abutting blocks 64 of the base member 60 are inserted into and assembled with the third portion 113 of the channel 11 of the inner frame 10, and the abutting blocks 64 of the base member 60 abut against the inner flange 5111 of the housing 50. In this embodiment, the other end of the elastic member 22 of the core component 20 abuts against the protruding blocks 63.

Please refer to Fig. 3 to Fig. 7. In some embodiments, each of the protruding blocks 63 of the base member 60 has two flat surfaces 631, a first curved surface 632, a second curved surface 633 opposite to the first curved surface 632, and an end surface 634. The flat surfaces 631 are parallel to each other and respectively perpendicular to the intermediate surface 62, the first curved surface 632 and the second curved surface 633 are opposite to each other and connected between the two flat surfaces 631, the end surface 634 is connected among the two flat surfaces 631, the first curved surface 632, and the second curved surface 633, and the end surface 634 is parallel to the intermediate surface 62. In these embodiments, the shape of the cross-section of the third portion 113 of the channel 11 of the inner frame 10 corresponds to the shape of the assembly of the two protruding blocks 63. In this embodiment, the shape of the cross-section of the third portion 113 is a rectangle including two curved sides and two linear sides. Accordingly, the base member 60 can be inserted into the third portion 113 of the channel 11 of the inner frame 10 through the two protruding blocks 63; through the configuration of the protruding blocks 63, the base member 60 can be prevented from being rotated relative to the inner frame 10, so that the structural stability of the optoelectronic connector C can be enhanced.

Please refer to Fig. 5 to Fig. 7. In some embodiments, the first curved surfaces 632 of the two protruding blocks 63 of the base member 60 are opposite to each other, and the first curved surfaces 632 of the two protruding blocks 63 each is configured as a semicircular shape. In these embodiments, the two protruding blocks 63 are arranged on the intermediate surface 62 symmetrically. Therefore, the region enclosed by the first curved surfaces 632 of the two protruding blocks 63 is approximately formed as circle and adapted to be inserted by the connection sleeve 213 of the core component 20, and the elastic member 22 can abut against the end surface 634 of each of the protruding blocks 63.

Please refer to Fig. 3 to Fig. 7. In some embodiments, each of the protruding blocks 63 of the base member 60 further comprises an engaging block 635. The engaging block 635 is on the second curved surface 633 of the protruding block 63. In these embodiments, the inner frame 10 further comprises engaging holes 16 corresponding to the third portion 113. When the protruding blocks 63 of the base member 60 are inserted into the third portion 113 of the channel 11 of the inner frame 10, each of the engaging blocks 635 of the base member 60 is engaged with a corresponding one of the engaging holes 16 of the inner frame 10, so that the base member 60 can be stably positioned in the inner frame 10.

Please refer to Fig. 5. In some embodiments, each of the engaging blocks 635 has an inclined surface 6351, the inclined surface 6351 has a first side 6352 and a second side 6353 opposite to each other. Along the first direction D1, the first side 6352 is nearer to the first portion 111 of the channel 11 of the inner frame 10 as compared with the second side 6353 (in other words, in this embodiment, along the first direction D1, a distance between the first side 6352 and the first portion 111 is less than a distance between the second side 6353 and the first portion 111). Along the second direction D2 perpendicular to the first direction D1, the first side 6352 is nearer to the core component 20 as compared with the second side 6353 (in other words, in this embodiment, along the second direction D2, a distance between the first side 6352 and the core component 20 is less than a distance between the second side 6353 and the core component 20). Therefore, when the base member 60 is to be assembled with the inner frame 10, the base member 10 is inserted into the third portion 113 of the inner frame 10 with the protruding blocks 63. Moreover, the protruding block 63 is inserted into the third portion 113 with the first side 6352 of the engaging block 635. Accordingly, when the protruding block 63 of the base member 60 is moved into the third portion 113 of the channel 11, the first engaging block 635 of the protruding block 63 enters the third portion 113 with the first side 6352 which is nearer to the core component 20, and then along the inclined surface 6351, the configuration changes so that the second side 6353 enters the third portion 113 and the engaging holes 16. Hence, through the guiding of the inclined surface 6351, the difficulty for assembling the base member 60 with the inner frame 10 can be reduced.

Please refer to Fig. 5. In some embodiments, the engaging blocks 635 of the protruding blocks 63 of the base member 60 are spaced from each other by a central angle of 180 degrees. In these embodiments, the abutting blocks 64 are on the intermediate surface 62 by a central angle of 180 degrees, and each of the abutting blocks 64 and a corresponding one of the protruding blocks 63 are spaced from each other by a central angle of 90 degrees.

Please refer to Fig. 3 to Fig. 7. In some embodiments, each of the abutting blocks 64 is an L-shaped block and comprises a first section 641 and a second section 642 connected to each other, the first section 641 is perpendicular to the intermediate surface 62, and the second section 642 is perpendicular to the first section 641. Moreover, along the second direction D2, the second section 642 protrudes beyond a peripheral portion of the intermediate surface 62. In these embodiments, the inner frame 10 further comprises two open slots 17 at the third portion 113 of the channel 11, and the shape of each of the open slots 17 generally corresponds to the shape of the second section 642 of a corresponding one of the abutting blocks 64. Accordingly, when the base member 60 is assembled with the inner frame 10, each of the abutting blocks 64 of the base member 60 can be accommodated in a corresponding one of the open slots 17. Therefore, the base member 60 can be prevented from being rotated relative to the inner frame 10, so that the structural stability of the assembly of the base member 60 and the inner frame 10 can be enhanced.

Please refer to Fig. 3 to Fig. 7. In some embodiments, the sleeve member 70 is a hollow tubular structure in which two ends thereof have threaded patterns, one of the two ends of the sleeve member 70 is threaded with the connection section 61 of the base member 60, and the other end of the sleeve member 70 is adapted to be threaded with other peripheral devices. In some embodiments, the optoelectronic connector C further comprises a fitting member 90 enclosing portions of the base member 60 and the inner frame 10. In these embodiments, the fitting member 90 encloses the engaging holes 16 of the inner frame 10 and the engaging blocks 635 of the base member 60. Therefore, the engaging blocks 635 can be prevented from being mistakably touched to detach the base member 60 from the inner frame 10. Accordingly, the structural stability of the assembly of the base member 60 and the inner frame 10 can be enhanced.

Please refer to Fig. 3 to Fig. 7. In some embodiments, the optoelectronic connector C further comprises a ring 80 fitted over the outer surface of the inner frame 10. In these embodiments, along the first direction D1, the position of the ring 80 on the outer surface of the inner frame 10 corresponds to the position of the first portion 111 of the channel 11. Accordingly, when the optoelectronic connector C is mating with the optoelectronic adapter A, the optoelectronic adapter A is fitted over the outer surface of the inner frame 10 corresponding to the first portion 111. Therefore, after the optoelectronic adapter A is mated with the optoelectronic connector C, the ring 80 is arranged between the optoelectronic connector C and the optoelectronic adapter A to provide the friction between the optoelectronic connector C and the optoelectronic adapter A and allow the optoelectronic connector C and the optoelectronic adapter A to be closely mated with each other. Consequently, the stability of the assembly of the optoelectronic connector C and the optoelectronic adapter A can be enhanced.

In some embodiments, the inner frame 10 of the optoelectronic connector 10 further comprises a guiding groove 18, the length of the guiding groove 18 extends along the first direction 10, a cross-section of the guiding groove 18 is rectangular, and the guiding groove 18 is recessed from the outer surface of the inner frame 10. The position of the guiding groove 18 along the first direction D 1 extends from one end of the first portion 111 away from the second portion 112 toward a joint portion between the first portion 111 and the second portion 112. In these embodiments, the optoelectronic adapter A further comprises a guiding portion A4 at the inner side of the connection plug A1. Therefore, when the optoelectronic adapter A and the optoelectronic connector C are mating with each other, the guiding groove 18 of the optoelectronic connector C and the guiding portion A4 of the optoelectronic adapter A firstly correspond to each other and the subsequent assembling procedures are conducted. Under this configuration, the connection plug A1 of the optoelectronic adapter A is inserted into the space between the housing 50 and the inner frame 10 of the optoelectronic connector C, the socket A2 is correspondingly fitted over the insertion pin 211 of the core member 21 of the core component 20, and the conductive port A3 is inserted into the through hole 14 of the inner frame 10 to contact the conductive terminals 30. Accordingly, after the assembling process, the assembly of the optoelectronic connector C and the optoelectronic adapter A can provide both optical and electrical connections. Moreover, the configuration that the guiding groove 18 extends along the first direction D1 allows the optoelectronic adapter A to be guided and moved along the first direction D1, thereby facilitating the convenience in assembling the optoelectronic connector C with the optoelectronic adapter A.

## Claims

1. An optoelectronic connector (C), comprising:
an inner frame (10);
a core component (20) elastically displaceably inserted into the inner frame (10) along a first direction (D1);
two conductive terminals (30) inserted into the inner frame (10);
an elastic unit (40), wherein one of two ends of the elastic unit (40) abuts against the inner frame (10);
a housing (50), wherein the housing (50) has a wall portion (51), a fitting groove (52), a first end opening (53), and a second end opening (54), the first end opening (53) and the second end opening (54) are at two ends of the wall portion (51), the housing (50) is rotatably fitted over the inner frame (10) through the first end opening (53) and abuts against the other end of the elastic unit (40), and the fitting groove (52) is defined through the wall portion (51);
a base member (60) passing through the second end opening (54) of the housing (50) and positioned with the inner frame (10); and
a sleeve member (70) fitted over the base member (60).

2. The optoelectronic connector (C) according to claim 1, wherein the fitting groove (52) of the housing (50) has a first end (521), an extension portion (522), and a second end (523) sequentially connected to each other, the first end (521) is in communication with the first end opening (53), the first end (521) and the second end (523) are at different positions along the first direction (D1), and the first end (521) and the second end (523) are at different circumferential positions of the housing (50).

3. The optoelectronic connector (C) according to claim 2, wherein the extension portion (522) of the fitting groove (52) of the housing (50) has a first section (5221), a second section (5222), and a third section (5223) sequentially connected to each other, the first section (5221) is connected to the first end (521), the third section (5223) is connected to the second end (523), and the first section (5221) and the third section (5223) extend along the first direction (D1).

4. The optoelectronic connector (C) according to claim 1, wherein the wall portion (51) of the housing (50) further has an inner side (511) and an outer side (512) opposite to each other, the inner side (511) faces the inner frame (10) and has an inner flange (5111), the base member (60) further comprises two abutting blocks (64), and the inner flange (5111) of the housing (50) abuts against the two abutting blocks (64).

5. The optoelectronic connector (C) according to claim 4, wherein the inner frame (10) further comprises an outer flange (15) at an outer surface of the inner frame (10), and the two ends of the elastic unit (40) respectively abut against the outer flange (15) and the abutting blocks (64).

6. The optoelectronic connector (C) according to claim 5, wherein the inner frame (10) further comprises two open slots (17) opposite to each other, and each of the two abutting blocks (64) of the base member (60) is accommodated in a corresponding one of the two open slots (17).

7. The optoelectronic connector (C) according to claim 1, wherein the base member (60) further comprises two protruding blocks (63), each of the two protruding blocks (63) has a first curved surface (632), the first curved surface surfaces (632) of the two protruding blocks (63) are opposite to each other, the core component (20) comprises a core member (21) and an elastic member (22), one of two ends of the core member (21) is in the inner frame (10), the other end of the core member (21) is between the two first curved surfaces (632), and two ends of the elastic member (22) respectively abut against the two protruding blocks (63) and the core member (21).

8. The optoelectronic connector (C) according to claim 7, wherein each of the protruding blocks (63) of the base member (60) further comprises an engaging block (635), the engaging block (635) and the first curved surface (632) are at opposite surfaces of each of the protruding blocks (63), the inner frame (10) further has two engaging holes (16), and each of the engaging blocks (635) of the base member (60) is engaged with a corresponding one of the engaging holes (16) of the inner frame (10).

9. The optoelectronic connector (C) according to claim 8, wherein each of the engaging blocks (635) has an inclined surface (6351), the inclined surface (6351) has a first side (6352) and a second side (6353) opposite to each other, the first side (6352) and the second side (6353) are at different positions along the first direction (D1), and the first side (6352) is nearer to the core component (20) as compared with the second side (6353) along a second direction (D2) perpendicular to the first direction (D1).

10. The optoelectronic connector (C) according to claim 7, wherein the core member (21) comprises an insertion pin (211), a blocking member (212), and a connection sleeve (213); the insertion pin (211) and the connection sleeve (213) are respectively at two opposite sides of the blocking member (212), the inner frame (10) further has a first partition wall (12), the blocking member (212) abuts against the first partition wall (12), the insertion pin (211) is at one side of the first partition wall (12) which is away from the base member (60), the connection sleeve (213) is at one side of the first partition wall (12) which is adjacent to the base member (60), and the elastic member (22) abuts against the blocking member (212) and the protruding blocks (63).

11. The optoelectronic connector (C) according to claim 1, further comprising a ring (80) fitted over an outer surface of the inner frame (10).

12. The optoelectronic connector (C) according to claim 1, wherein the inner frame (10) further has a guiding groove (18) recessed from an outer surface of the inner frame (10), a cross-section of the guiding groove (18) is rectangular, and a length of the guiding groove (18) extends along the first direction (D1).
